# EUROPEAN PATENT APPLICATION

(11) **EP 4 545 707 A1**
(43) Date of publication of application: **30.04.2025**
(21) Application number: 22947910.0
(22) Date of filing: 21.06.2022
(51) Int. Cl.: E02B 1/00, A01M 29/00, A01K 61/90

(54) **BARNACLE LARVAE DETECTION DEVICE AND DRUG CONCENTRATION MANAGEMENT SYSTEM**

(71) Applicant: The Chugoku Electric Power Co., Inc., Hiroshima-shi, Hiroshima 730-8701 (JP)
(72) Inventor: NISHIDA, Yurika, Hiroshima-shi, Hiroshima 730-8701 (JP); YANAGAWA, Toshiharu, Hiroshima-shi, Hiroshima 730-8701 (JP); NAKAMURA, Akifumi, Hiroshima-shi, Hiroshima 730-8701 (JP); HAYASHI, Yoshio, Himeji-Shi, Hyogo 672-8023 (JP); KAMIYA, Kyoko, Himeji-Shi, Hyogo 672-8023 (JP); YAMASHITA, Keiji, Himeji-Shi, Hyogo 672-8023 (JP)
(74) Representative: HGF
(86) International application number: PCT/JP2022/024741
(87) International publication number: WO 2023/248348

(57) **Abstract**

Provided is a barnacle larvae detection device that can easily detect and continuously monitor attachment-stage larvae of barnacles. This barnacle larvae detection device has an image data acquisition unit that acquires image data, and a detection unit that detects barnacle larvae having a prescribed shape from the image data, the detection unit detecting and counting barnacle larvae having the prescribed shape on the basis of a trained model that is constructed using, as training data, image data in which annotations have been assigned to barnacle larvae having at least the prescribed shape.

## Description

### TECHNICAL FIELD

The present invention relates to a detection device for barnacle larvae, and a chemical concentration management system.

### BACKGROUND ART

In a thermal power plant, a nuclear power plant, or the like that uses seawater as cooling water, there are cases where marine organisms such as barnacles attach to the inside of a water intake path that takes in seawater from the sea and supplies the seawater to a condenser, or a water discharge path that discharges the seawater that has passed through the condenser to the sea. When the number of marine organisms attached increases, this may cause problems such as blocking the cooling water flow path and reducing cooling performance. Therefore, to suppress the attachment of marine organisms, a chemical for the purpose of suppressing the attachment of organisms, such as a chlorine-based chemical, is conventionally injected into the cooling water.

However, adding an excessive amount of a chemical such as a chlorine-based chemical to the cooling water cannot be said to be preferable from the viewpoint of environmental influence and the viewpoint of cost for adding the chemical, and it is required to add an appropriate amount of a chemical such as a chlorine-based chemical. For example, if the number of attached organisms such as barnacles in seawater can be ascertained, it is possible to appropriately adjust the addition amount of a chemical such as a chlorine-based chemical according to the number of attached organisms.

As a method of surveying barnacles, a method of surveying the number of barnacles attached to a test plate immersed in the sea is considered, but continuous monitoring is difficult, and measures for suppressing attachment cannot be quickly performed because the survey is performed after attachment. As a method for detecting attachment-stage larvae of barnacles, a method using a detection kit using a monoclonal antibody specific to the attachment-stage larvae of barnacles has been disclosed (for example, see Patent Document 1).

### Citation List

### Patent Document

Patent Document 1: Japanese Unexamined Patent Application, Publication No. 2006-246821

The technique disclosed in Patent Document 1 can detect the attachment-stage larvae of barnacles with high detection accuracy. On the other hand, since the kit is disposable, continuous monitoring cannot be performed and the cost required for detection increases.

### DISCLOSURE OF THE INVENTION

### Problems to be Solved by the Invention

In response to the above issues, an object of the present invention is to provide a detection device for barnacle larvae capable of easily detecting attachment-stage larvae of barnacles and continuously monitoring the attachment-stage larvae of barnacles.

### Means for Solving the Problems

(1) The present invention relates to a detection device for barnacle larvae including an image data acquisition unit configured to acquire image data, and a detection unit configured to detect barnacle larvae having a predetermined shape from the image data. The detection unit detects and counts the barnacle larvae having the predetermined shape based on a learned model constructed using, as learning data, the image data to which annotations are added for at least the barnacle larvae having the predetermined shape.
(2) In the detection device for barnacle larvae according to (1), the barnacle larvae having the predetermined shape are at least one of cypris larvae or nauplius larvae.
(3) A chemical concentration management system including the detection device for barnacle larvae according to (1) or (2), a chemical concentration control device, and a microorganism imaging device. The chemical concentration control device includes a control unit configured to control an amount of a chemical injected into seawater from a chemical injection unit in a seawater utilization plant. The microorganism imaging device includes a sample acquisition unit configured to collect seawater near the seawater utilization plant, and an imaging unit configured to capture an image of the seawater acquired by the sample acquisition unit. The image data acquisition unit acquires the image data captured by the imaging unit. The control unit controls the amount of the chemical injected into the seawater based on a detection result by the detection unit.

### Effects of the Invention

According to the present invention, it is possible to provide a detection device for barnacle larvae capable of easily detecting attachment-stage larvae of barnacles and continuously monitoring the attachment-stage larvae of barnacles.

### BRIEF DESCRIPTION OF THE DRAWINGS

FIG. 1 is a schematic diagram showing the external shape and arrangement of organs of a cypris larva, which is a detection target of a detection device for barnacle larvae according to the present embodiment;
FIG. 2 is a block diagram showing the configuration of a chemical concentration management system according to the present embodiment; and
FIG. 3 shows learning data for the detection device for barnacle larvae according to the present embodiment.

### PREFERRED MODE FOR CARRYING OUT THE INVENTION

### <Detection Device for Barnacle Larvae>

A detection device for barnacle larvae according to the present embodiment includes a detection unit that detects barnacle larvae having a predetermined shape from image data that may include barnacle larvae.

Barnacles is a generic term for organisms classified into Arthropoda, Crustacea, Cirripedia, and Thoracica, and includes, for example, organisms belonging to Balanomorpha, which includes Amphibalanus amphitrite, Amphibalanus eburneus, Megabalanus rosa, Balanus trigonus, Megabalanus volcano, Amphibalanus reticulatus, Chthamalus challengeri, Balanus albicostatus, and Amphibalanus improvisus.

Barnacles float in the sea during their larval stage, and when they reach attachment-stage larvae, they attach to a suitable attachment material and undergo metamorphosis into adults. The outline of the stages involved in breeding in the life history of barnacles is as follows. That is, after mating between attached adults and fertilization, the nauplius larvae in the floating stage hatch. After the nauplius larvae repeatedly molt, the nauplius larvae become cypris larvae in the attachment stage (attachment-stage larvae), and the cypris larvae attach to the substrate and metamorphose into juvenile barnacles. This breeding time is unique to each species.

Cypris larvae attach to underwater structures, such as seawater intake or discharge facilities at power plants, coastal aquaculture facilities, and fishing facilities, and then grow thereon, potentially causing adverse effects on these facilities. Therefore, by ascertaining the number of cypris larvae and nauplius larvae living in the sea area where these facilities exist, it is possible to take necessary measures, such as injection of chemicals. Since cypris larvae and nauplius larvae each have a characteristic predetermined shape, it is possible to detect the barnacle larvae in images with a detection device for barnacle larvae 10.

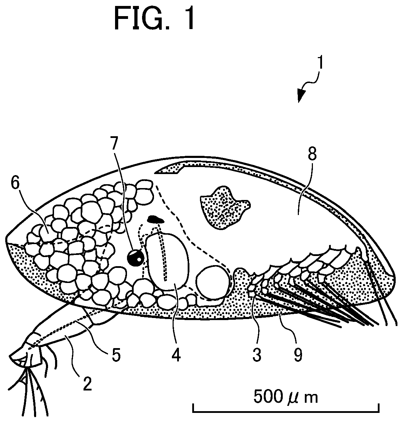

A cypris larva 1 has a predetermined shape as shown in FIG. **1****.** The cypris larva 1 has a spindle-shaped transparent crust (shell) 9 which is laterally flattened in the left and right directions. A pair of first antennae 2 are present on the front side of the abdominal surface, and six pairs of thoracic limbs 3 are present on the rear half of the abdominal surface, and they extend from the inside of the crust **9.** The first antenna 2 is an organ whose tip has a suction cup shape for attachment, and an adhesive substance (quinone crosslinked binding protein) secreted from a cement gland 4 through a cement duct 5 is secreted onto the surface of the attachment organ and attaches to the substrate. The cypris larvae examine for their suitability with the substrate by repeatedly approaching and leaving the substrate, and during that time, they temporarily attach so as to be detachable, and then permanently attach to a finally determined fixing point. In the figure, reference numeral 6 denotes an oil cell, reference numeral 7 denotes a compound eye, and reference numeral 8 denotes a thorax.

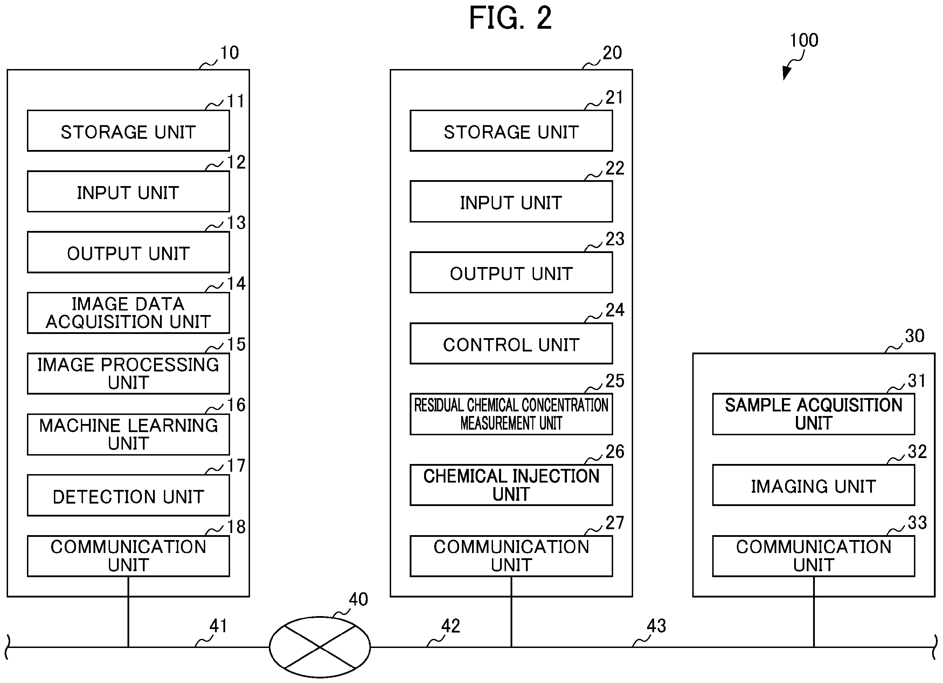

The detection device for barnacle larvae according to the present embodiment is, for example, the detection device for barnacle larvae 10, which is one component of a chemical concentration management system 100 shown in FIG. **2.** FIG. 2 is a block diagram showing an example of main functions that may be provided in the detection device for barnacle larvae 10.

The detection device for barnacle larvae 10 includes an image data acquisition unit 14 that acquires image data, and a detection unit 17 that detects barnacle larvae having a predetermined shape from the image data. In addition to the above, the detection device for barnacle larvae 10 may include a storage unit 11, an input unit 12, an output unit 13, an image processing unit 15, a machine learning unit 16, and a communication unit 18.

The storage unit 11 includes a storage device such as a hard disk drive (HDD) or a semiconductor drive (SSD), and stores images subjected to image processing by the image processing unit 15, learned models generated by the machine learning unit 16, and the like.

The input unit 12 includes, for example, a keyboard, and a mouse, and receives an input by a user of the detection device for barnacle larvae 10.

The output unit 13 includes a display or the like that displays images subjected to image processing by the image processing unit 15 and detection results by the detection unit 17. The input unit 12 and the output unit 13 may have a configuration in which a display function and an input function are integrated, such as a touch panel.

The image data acquisition unit 14 acquires image data. The image data is image data that may include barnacle larvae. In the present embodiment, the image data acquisition unit 14 acquires image data including barnacle larvae captured by an imaging unit 32 of a microorganism imaging device 30. The format of the image data acquired by the image data acquisition unit 14 is not limited at all, and may be a still image or a moving image. The image acquired by the image data acquisition unit 14 may be an image captured under a fluorescence microscope. This is because the position of the fluorescence of the barnacle larvae differs depending on the larvae, and the type of the larvae can be determined based on the position of the fluorescence.

The image processing unit 15 performs image processing on the image data acquired by the image data acquisition unit 14. Examples of the image processing include size conversion, rotation, color conversion, and noise removal. The functions of the image data acquisition unit 14 and the image processing unit 15 are realized by, for example, a processor executing a computer program stored in a memory.

The machine learning unit 16 constructs a model such as a convolutional neural network (CNN). The CNN includes an input layer, an intermediate layer, and an output layer. Learning data (correct answer data) to be learned is input to the input layer. The intermediate layer detects features from an image input to the input layer. The output layer outputs a recognition result of the presence or absence of an abnormal portion in the image based on the features extracted by the intermediate layer. The CNN has a plurality of layer structures and holds a plurality of weight parameters. By updating the weight parameter from the initial value to the optimal value, the pre-learned model changes into a learned model.

The machine learning unit 16 outputs a learned model constructed using, as learning data, the image data to which annotations are added for at least barnacle larvae having a predetermined shape, with respect to an image subjected to image processing by the image processing unit 15. The output learned model may be a learned model that detects and counts only cypris larvae, or may be a learned model that detects and counts cypris larvae and nauplius larvae.

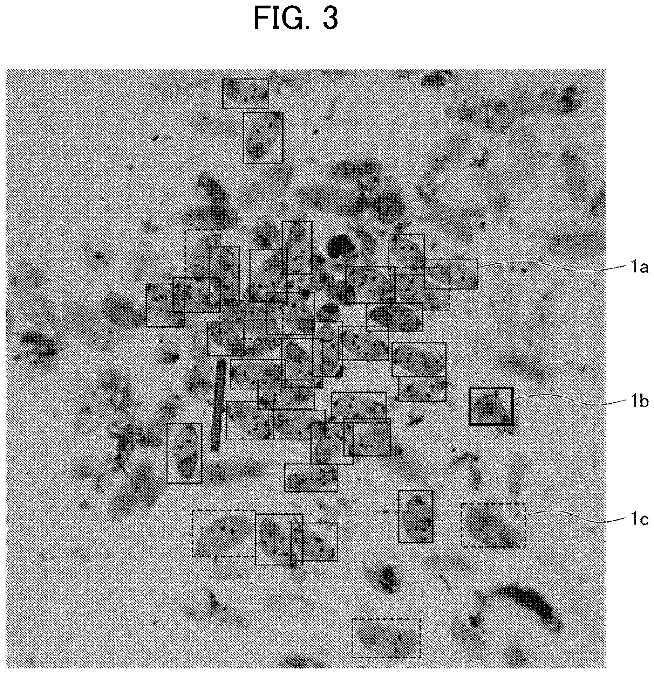

FIG. 3 is an example of learning data to which annotations are added. In the example of FIG. 3, three types of barnacle larvae, i.e.**,** nauplius larvae 1b, small cypris larvae 1a, and large cypris larvae 1c, are respectively surrounded by bounding boxes, which indicates the state where annotations are added. The annotations are added in response to operations by the user of the detection device for barnacle larvae 10.

The detection unit 17 detects and counts barnacle larvae having a predetermined shape based on the image data subjected to image processing by the image processing unit 15. The barnacle larvae having a predetermined shape are preferably cypris larvae, and it is further preferable that nauplius larvae can be detected and counted separately from cypris larvae. The functions of the detection unit 17 are realized based on the learned model output by the machine learning unit 16.

Examples in which the detection unit 17 detects barnacle larvae using the learned model output by the machine learning unit 16 will be described below.

### (Machine Learning Condition 1)

From a sample collected with a plankton net, only barnacle larvae were attracted and collected by utilizing the phototaxis of barnacle larvae. Tap water in an amount three times that of the collected sample of the barnacle larvae was added to the sample of the barnacle larvae to stop the larvae from swimming and cause them to settle. The settled larvae were then collected in a petri dish and a magnified photograph was taken from the underside of the dish using a digital camera (manufactured by Olympus Corporation). Annotations as shown in FIG. 3 were added to the captured image to obtain learning data. In view of the adult development status at the sample collection site, cypris larvae were classified as large cypris larvae if they were assumed to be Megabalanus rosa or Balanus trigonus, and as small cypris larvae if they were assumed to be Amphibalanus reticulatus, Balanus kondakovi, or Amphibalanus eburneus. Nauplius larvae were annotated without classifying them by species.

By preparing 1080 pieces of the learning data and performing machine learning, a learned model was generated. The generated learned model was used to detect barnacle larvae using 180 test images. The results were as follows: small cypris larvae AP (average precision) = 0.84, large cypris larvae AP (average precision) = 0.39, nauplius larvae AP (average precision) = 0.39, and the average value of AP, mAP = 0.54.

### (Machine Learning Condition 2)

A learned model was generated under the same conditions as those of machine learning condition 1 except that the learning data was rotated by 90° each time and the images were replicated to prepare 4320 pieces of learning data. The generated learned model was used to detect barnacle larvae using 180 test images. The results were as follows: small cypris larvae AP (average precision) = 0.85, large cypris larvae AP (average precision) = 0.39, nauplius larvae AP (average precision) = 0.36, and the average value of AP, mAP = 0.53.

### (Machine Learning Condition 3)

A learned model was generated under the same conditions as those of machine learning condition 1. The generated learned model was used to detect cypris larvae using 180 test images regardless of size. The results showed that the average value of AP (average precision), mAP = 0.87, confirming that the results were practical for use in detection of cypris larvae of barnacles in images.

The communication unit 18 allows the detection device for barnacle larvae 10 to communicate with other devices through communication means such as a communication line 41. The communication line 41 is wired or wireless communication means, and is configured to be connectable to the Internet 40, for example.

Since the detection device for barnacle larvae 10 detects barnacle larvae based on a learned model constructed using image data acquired by the image data acquisition unit 14 as learning data, focusing on the shapes of cypris larvae and nauplius larvae each having a predetermined shape, the barnacle larvae can be easily detected, and the presence or absence and the number of the barnacle larvae can be continuously monitored.

The configuration shown in FIG. 2 is merely an example of the detection device for barnacle larvae 10, and the present invention is not limited to the configuration shown in FIG. **2****.** For example, the detection device for barnacle larvae 10 may not include the storage unit 11, and the storage unit 11 may be provided in an external device capable of communicating with the detection device for barnacle larvae 10. Alternatively, the detection device for barnacle larvae 10 may be configured without the communication unit 18.

### <Chemical Concentration Management System>

Next, a description will be given of the chemical concentration management system 100 including the above-described detection device for barnacle larvae 10. The chemical concentration management system 100 manages a chemical injection concentration in a seawater utilization plant. As shown in FIG. 2, the chemical concentration management system 100 includes a detection device for barnacle larvae 10, a chemical concentration control device 20, and a microorganism imaging device 30. The chemical concentration management system 100 detects and counts barnacle larvae with the detection device for barnacle larvae 10 based on the microorganism image captured by the microorganism imaging device 30, and manages the chemical injection concentration with the chemical concentration control device 20 based on the detection and counting results, so that the chemical can be injected at an effective timing and in an appropriate amount.

The chemical whose injection concentration is managed by the chemical concentration management system 100 is a chemical for the purpose of suppressing biofouling on a structure in water (seawater utilization plant). Such a chemical is not limited, and known chemicals can be used. Examples of the chemical include chlorine-based chemicals such as sodium hypochlorite and chlorine dioxide, and oxidizing agents such as hydrogen peroxide, ozone, and peracetic acid. In addition to the above, non-oxidizing agents such as quaternary ammonium compounds or polyquaternary ammonium compounds, organic compounds such as aromatic hydrocarbons and alkyldiamines, metal salts serving as sources of copper ions and the like, ammonium nitrate, metabisulfite, antioxidants, catalytic enzymes, and the like can be used. The chemical concentration management system according to the present embodiment can perform control so that the residual chemical concentration does not exceed a predetermined threshold. Therefore, the chemical is preferably a chlorine-based chemical whose residual concentration is limited by an agreement with a region or the like from the viewpoint of protection of aquatic resources.

The seawater utilization plant to which the chemical concentration management system can be applied is not limited, and examples thereof include power plants such as thermal power plants and nuclear power plants.

### (Chemical Concentration Control Device)

The chemical concentration control device 20 includes, for example, as shown in FIG. 2, a storage unit 21, an input unit 22, an output unit 23, a control unit 24, a residual chemical concentration measurement unit 25, a chemical injection unit 26, and a communication unit 27.

Configurations of the storage unit 21, the input unit 22, and the output unit 23 can be the same as those of the storage unit 11, the input unit 12, and the output unit 13 above, respectively. The storage unit 21 stores the measurement value of the residual chemical concentration measured by the residual chemical concentration measurement unit 25 and the detection and counting results of the barnacle larvae received from the detection device for barnacle larvae 10.

The control unit 24 controls the amount of the chemical injected from a predetermined place of the seawater system of the seawater utilization plant by the chemical injection unit 26. The control unit 24 controls the amount of the chemical injected based on the detection and counting results of the barnacle larvae received from the detection device for barnacle larvae 10. Specifically, the detection and counting results of the barnacle larvae received from the detection device for barnacle larvae 10 may be obtained as the number of detected barnacle larvae with respect to a predetermined volume of seawater. When the number of detected barnacle larvae exceeds a predetermined threshold, control may be performed to increase the amount of injected chemical from a normal amount. Alternatively, when the number of detected barnacle larvae is less than a predetermined threshold, control may be performed to reduce the amount of injected chemical from a normal amount. In addition to the above, the control unit 24 may control the amount of injected chemical so that the residual chemical concentration measured by the residual chemical concentration measurement unit 25 does not exceed a predetermined threshold. At least a part of the above functions of the control unit 24 may be realized manually based on the above detection count or the like, or may be realized by executing a program stored in the storage unit 21.

The residual chemical concentration measurement unit 25 measures the residual chemical concentration at a predetermined location (for example, the inlet of the condenser) of the seawater system of the seawater utilization plant. The residual chemical concentration measurement unit 25 allows the control unit 24 to control the amount of injected chemical so as to comply with a reference value such as an environmental conservation agreement value at the discharge port of the seawater system of the seawater utilization plant. The configuration of the residual chemical concentration measurement unit 25 is not limited, and a known concentration meter such as a residual chlorine concentration meter can be used.

The chemical injection unit 26 injects a chemical (sodium hypochlorite or the like) from a predetermined location (for example, any location upstream of the condenser) of the seawater system of the seawater utilization plant. The means for injecting the chemical is not limited, and the chemical may be injected or seawater may be electrolyzed.

The communication unit 27 allows the chemical concentration control device 20 to communicate with other devices through communication means such as a communication line 42. The communication line 42 is wired or wireless communication means, and is configured to be connectable to the Internet 40, for example.

### (Microorganism Imaging Device)

The microorganism imaging device 30 acquires image data that may include barnacle larvae based on seawater flowing through the seawater system of the seawater utilization plant or seawater near the seawater utilization plant. As shown in FIG. 2, the microorganism imaging device 30 includes a sample acquisition unit 31, an imaging unit 32, and a communication unit 33.

The sample acquisition unit 31 takes in seawater flowing through the seawater system of the seawater utilization plant or seawater near the seawater utilization plant, and acquires a sample by filtering a predetermined volume of seawater with a plankton net or the like. In the sample acquisition unit 31, any processing such as dilution or separation of the sample to assist imaging by the imaging unit 32 and adding tap water to stop the cypris larvae from swimming can be performed.

The imaging unit 32 captures an image of the sample acquired by the sample acquisition unit 31 and obtains image data. The image data captured by the imaging unit 32 is transmitted to the detection device for barnacle larvae 10 via the communication unit 33. The imaging unit 32 may capture an image of the sample a plurality of times. The specific configuration of the imaging unit 32 is not limited. For example, a camera device having a function of capturing magnified images can be used.

The communication unit 33 allows the microorganism imaging device 30 to communicate with other devices through communication means such as a communication line 43. The communication line 43 is wired or wireless communication means, and is configured to be connectable to the Internet 40, for example.

The configurations of the chemical concentration control device 20 and the microorganism imaging device 30 shown in FIG. 2 are merely examples, and the present invention is not limited thereto. The respective devices that realize the respective functions of the above devices do not necessarily have to be integrally provided, and the respective devices may be provided independently so as to be able to communicate with each other.

Preferred embodiments of the present invention have been described above. The present invention is not limited to the above-described embodiments, and modifications, improvements, and the like within a range in which the object of the present invention can be achieved are included in the present invention.

### EXPLANATION OF REFERENCE NUMERALS

1 cypris larvae
10 detection device for barnacle larvae
14 image data acquisition unit
17 detection unit
20 chemical concentration control device
24 control unit
26 chemical injection unit
30 microorganism imaging device
32 imaging unit

## Claims

1. A detection device for barnacle larvae comprising:
an image data acquisition unit configured to acquire image data; and
a detection unit configured to detect barnacle larvae having a predetermined shape from the image data,
wherein the detection unit detects and counts the barnacle larvae having the predetermined shape based on a learned model constructed using, as learning data, the image data to which annotations are added for at least the barnacle larvae having the predetermined shape.

2. The detection device for barnacle larvae according to claim 1, wherein the barnacle larvae having the predetermined shape are at least one of cypris larvae or nauplius larvae.

3. A chemical concentration management system comprising: the detection device for barnacle larvae according to claim 1 or **2;** a chemical concentration control device; and a microorganism imaging device,
wherein the chemical concentration control device comprises a control unit configured to control an amount of a chemical injected into seawater from a chemical injection unit in a seawater utilization plant,
wherein the microorganism imaging device comprises a sample acquisition unit configured to collect seawater near the seawater utilization plant, and an imaging unit configured to capture an image of the seawater acquired by the sample acquisition unit,
wherein the image data acquisition unit acquires the image data captured by the imaging unit, and
wherein the control unit controls the amount of the chemical injected into the seawater based on a detection result by the detection unit.
